# EUROPÄISCHE PATENTANMELDUNG

(11) **EP 4 429 082 A1**
(43) Veröffentlichungstag der Anmeldung: **11.09.2024**
(21) Anmeldenummer: 24161363.7
(22) Anmeldetag: 05.03.2024
(51) Int. Cl.: H02K 5/22, H02K 5/24, H02K 7/08, B60K 1/00

(54) **ANTRIEBSANORDNUNG FÜR EIN KRAFTFAHRZEUG**

(30) Priorität: 07.03.2023 DE 102023202044
(71) Anmelder: VOLKSWAGEN AG, 38440 Wolfsburg (DE)
(72) Erfinder: Kalinowski, Piotr, 14197 Berlin (DE); Schröder, Thomas, 12307 Berlin (DE); Stelzer, Christoph, 38471 Rühen (DE); Baß, Robert Maria, 38108 Braunschweig (DE)

(57) **Zusammenfassung**

Antriebsanordnung (1) für ein Kraftfahrzeug, umfassend
- einen Antrieb (10) mit einem wenigstens eine elektrische Antriebskomponente einschließenden Gehäuse (12), dessen Gehäusewand in mehrere einander axial benachbarte Abschnitte (121-124) unterteilt ist, wobei die beiden axial endständigen Abschnitte (122, 124) jeweils einen axial abnehmbaren Deckel des Gehäuses (12) bilden,
- einen Trägerrahmen (18) mit rahmenseitigen Lagerkomponenten, die mit korrespondierenden, gehäuseseitigen Lagerkomponenten Lager zur Aufhängung des Gehäuses (10) in dem Trägerrahmen (18) bilden, und
- eine elektrische Verbindung zwischen einem relativ zu dem Gehäuse (12) ortsfesten und mit der elektrischen Antriebskomponente im Gehäuseinneren verbundenen, gehäuseseitigen Anschluss und einem relativ zu dem Trägerrahmen (18) ortsfesten, mit einer elektrischen Energieversorgung verbundenen oder verbindbaren, rahmenseitigen Anschluss.

Die Erfindung zeichnet sich dadurch aus, dass
- die gehäuseseitigen Lagerkomponenten auf den Stirnseiten der beiden axial endständigen Abschnitte (122, 124) des Gehäuses (12) angeordnet sind,
- das Gehäuse (12) beidseitig axial passgenau in den Trägerrahmen (18) eingefügt ist und
- die elektrische Verbindung derart gestaltet ist, dass sie zur Entnahme des Gehäuses (12) aus dem Trägerrahmen (18) gelöst werden muss.

## Beschreibung

Die Erfindung bezieht sich auf eine Antriebsanordnung für ein Kraftfahrzeug, umfassend
- einen Antrieb mit einem wenigstens eine elektrische Antriebskomponente einschließenden Gehäuse, dessen Gehäusewand in mehrere einander axial benachbarte Abschnitte unterteilt ist, wobei die beiden axial endständigen Abschnitte jeweils einen axial abnehmbaren Deckel des Gehäuses bilden,
- einen Trägerrahmen mit rahmenseitigen Lagerkomponenten, die mit korrespondierenden, gehäuseseitigen Lagerkomponenten Lager zur Aufhängung des Gehäuses in dem Trägerrahmen bilden, und
- eine elektrische Verbindung zwischen einem relativ zu dem Gehäuse ortsfesten und mit der elektrischen Antriebskomponente im Gehäuseinneren verbundenen, gehäuseseitigen Anschluss und einem relativ zu dem Trägerrahmen ortsfesten, mit einer elektrischen Energieversorgung verbundenen oder verbindbaren, rahmenseitigen Anschluss.

Eine derartige Antriebsanordnung ist bekannt aus der US 9,692,277 B2.

Traktionsmaschinen von Kraftfahrzeugen müssen hohe Leistungen erbringen. Bei vollständig oder teilelektrifizierten Kraftfahrzeugantrieben, fallen entsprechend hohe Spannungen und Stromstärken an. Diese herrschen insbesondere in der elektrischen Maschine (EM), welche die elektrische in mechanische Leistung (und im Rekuperationsfall auch umgekehrt) wandelt, sowie in der Leistungselektronik, die typischerweise die Funktion eines Pulswechselrichters (PWR) erfüllt und die aus einer elektrischen Energieversorgung, insbesondere einer Batterie oder Brennstoffzelle, zur Verfügung gestellte elektrische Energie in das zur Steuerung der elektrischen Maschine benötigte Strom- und Spannungsmuster wandelt. Der mechanische Aufbau solcher elektrischer Antriebe umfasst typischerweise ein in Axialrichtung der elektrischen Maschine längs erstrecktes Gehäuse mit unterschiedlichen Gehäuseabschnitten. Im zentralen Gehäuseabschnitt ist das Getriebe untergebracht. Einerseits des Getriebes schließt sich die elektrische Maschine an, die über ihre Rotorwelle mechanisch mit dem Getriebe verbunden ist. Andererseits des Getriebes ist die Leistungselektronik, insbesondere der Pulswechselrichter angeordnet. Die jeweils axial endständigen Abschnitte des Gehäuses sind als Deckel ausgebildet und werden zur Spezifizierung häufig als EM-Deckel und PWR-Deckel bezeichnet. Sie sind reversibel mit dem übrigen Gehäuse verbunden, beispielsweise verschraubt, und können zur Demontage insbesondere in axialer Richtung abgezogen werden.

Mechanisch ist ein solcher Antrieb typischerweise in einem Trägerrahmen gehaltert. Dieser ist einerseits weitgehend starr mit tragenden Teilen des Kraftfahrzeugs verbunden und andererseits vibrationsdämpfend mit besagtem Antrieb. Hierzu werden häufig Gummilager verwendet. Ein solches Gummilager umfasst eine rahmenfeste Buchse, in der eine Gummihülse fixiert ist, in welcher wiederum ein starr mit dem Gehäuse verbundener Bolzen festgelegt ist. Die eingangs genannte, gattungsbildende Druckschrift offenbart eine derartige Gummilagerung, wobei die gehäuseseitigen Lagerkomponenten, d.h. besagte Bolzen an mehreren Stellen am Umfang des zentralen Getriebeabschnitts des Gehäuses fixiert sind.

Weiter bedarf es einer aus dem Gehäuse herausgeführten elektrischen Verbindung der Leistungselektronik mit der elektrischen Energiequelle des Fahrzeugs, wobei sich zu dieser elektrischen Verbindung in der vorgenannten Druckschrift keine Offenbarung findet. Üblicherweise wird hierzu jedoch ein Kabel benutzt, welches mittels einer Steckverbindung mit einem am PWR-Deckel angeordneten Anschluss verbindbar ist.

Aufgrund der bei angeschlossener Energieversorgung innerhalb des Gehäuses herrschenden, hohen Spannungen muss bei Reparatur- und Wartungsarbeiten höchste Sorgfalt walten. Insbesondere muss ausgeschlossen werden, dass im angeschlossenen Zustand Öffnungen zu spannungsbeaufschlagten Bereichen im Inneren des Gehäuses geschaffen werden. Dies betrifft insbesondere ein Abziehen der Deckel. Dabei kommt es nicht darauf an, bloß sicherzustellen, dass der Deckel nicht bequem vollständig abgezogen werden kann; auch die Schaffung von Spalten o.ä., durch welche z.B. ein Werkzeug in die spannungsführenden Bereiche eingeführt werden könnte, muss vermieden werden. Die eingangs genannte, gattungsbildende Druckschrift adressiert diese Problematik nicht.

Wohl aber die US 9,139,097 B2. Diese sieht vor, jeden möglichen Zugang zum Gehäuseinneren mit einem Magnetschalter auszustatten, der über eine Niederspannungs-Steuerleitung mit einer Steuereinheit verbunden ist. Ein Öffnen des Zugangs führt zu Betätigung des Magnetschalters, wodurch die Steuereinheit provoziert wird, die Hochspannungszufuhr zu unterbrechen. Dies ist im Hinblick auf die gewünschte HV-Sicherheit zielführend, aber konstruktiv ausgesprochen aufwendig und daher teuer.

Es ist die Aufgabe der vorliegenden Erfindung, eine gattungsgemäße Antriebsanordnung elektrisch sicherer zu gestalten.

Diese Aufgabe wird in Verbindung mit den Merkmalen des Oberbegriffs von Anspruch 1 dadurch gelöst, dass
- die gehäuseseitigen Lagerkomponenten auf den Stirnseiten der beiden axial endständigen Abschnitte des Gehäuses angeordnet sind,
- das Gehäuse beidseitig axial passgenau in den Trägerrahmen eingefügt ist und
- die elektrische Verbindung derart gestaltet ist, dass sie zur Entnahme des Gehäuses aus dem Trägerrahmen gelöst werden muss.

Bevorzugte Ausführungsformen der Erfindung sind Gegenstand der abhängigen Patentansprüche.

Die Grundidee der Erfindung liegt darin, einerseits ein Öffnen der Gehäusedeckel im eingebauten Zustand des Antriebs im Trägerrahmen rein mechanisch zu verunmöglichen und andererseits einen Ausbau des Antriebs aus dem Trägerrahmen nur bei getrennter elektrischer Verbindung zur Energieversorgung zu erlauben.

Der letztgenannte Aspekt kann insbesondere durch Verwendung eines hinreichend kurzen elektrischen Verbindungskabels, welches nur im eingebauten Zustand des Gehäuses die Distanz zwischen den Anschlüssen überbrücken kann, realisiert werden. Alternativ wäre ein direkter Steckkontakt zwischen einem am Gehäuse und einem am Trägerrahmen angeordneten Anschluss denkbar, der zwangsläufig gelöst wird, sobald das Gehäuse gegenüber dem Trägerrahmen bewegt wird.

Der erstgenannte Aspekt hingegen wird durch zwei miteinander wechselwirkende Teilmerkmale realisiert:
Zum einen sind die gehäuseseitigen Lagerkomponenten, d.h. die gehäuseseitigen Elemente der mechanischen Schnittstelle zwischen Gehäuse und Trägerrahmen, nicht, wie aus dem Stand der Technik bekannt, axial mittig des Gehäuses angeordnet. Im Gegenteil sind sie axial endständig, d.h. an den Stirnseiten der beiden Deckel angeordnet. Den Deckeln wird somit eine Doppelfunktion zugewiesen, nämlich einerseits (wie vorbekannt), als Abdeckung der spannungsführenden Elemente im Gehäuseinneren und andererseits als Stütze der mechanischen Lagerung des Gehäuses im Trägerrahmen.

Zum anderen werden Gehäuse und Trägerrahmen relativ zueinander so dimensioniert, dass die axiale Lücke, die der Trägerrahmen zur Aufnahme des Gehäuses bietet, exakt den axialen Außenabmessungen des Gehäuses entspricht. Im eingebauten Zustand besteht daher in axialer Richtung überhaupt kein Raum, in welchen hinein einer der Deckel axial abgezogen werden könnte. Selbst für eine geringfügige axiale Relativbewegung des Deckels zum Rest des Gehäuses, die zu einer Spaltbildung führen könnte, besteht kein Raum. Erst nach einem Lösen der Lagerung und einer Herausnahme des Gehäuses - im Rahmen welcher sich die elektrische Verbindung zwangsläufig löst bzw. gelöst werden muss - ergibt sich eine Möglichkeit, die Deckel vom Rest des Gehäuses zu entfernen. In diesem Zustand jedoch ist das Gehäuseinnere aufgrund der getrennten Verbindung zur elektrischen Energieversorgung spannungsfrei. Die Anforderungen an höchste HV-Sicherheit sind daher erfüllt.

Besonders bevorzugt ist vorgesehen, dass die Stirnseite wenigstens eines der Deckel einen axial vorspringenden Montagesockel aufweist, dessen Spitze die gehäuseseitige Lagerkomponente trägt. Dies erleichtert einerseits den Ein- und Ausbau des Antriebs aus dem Trägerrahmen und fokussiert zum anderen die mechanischen Kräfte auf den Bereich der Lagerung, sodass diese Lagerung umso präziser wirken kann.

Bevorzugt ist vorgesehen, dass die Lagerung mittels sogenannter Gummilager erfolgt, d.h. günstigerweise ist wenigstens eine der rahmenseitigen Lagerkomponenten als eine rahmenfeste Buchse mit einer in ihr fixierten Gummihülse ausgebildet, in der ein an der zugeordneten gehäuseseitigen Lagerkomponente am zugeordneten Deckel des Gehäuses fixierter Lagerbolzen gelagert ist. Dieser Bolzen kann bevorzugt mit dem Deckel verschraubt sein. Bei dieser Ausführungsform werden bei der Montage zunächst die Gummihülsen in die Buchsen des Rahmens eingeschoben. Sodann wird der Antrieb passgenau zwischen die Lagerstellen eingeschoben. Von axial außen durch die Gummihülsen eingeführte Schraubbolzen werden sodann in entsprechenden Gewinden in den Stirnseiten der Deckel verschraubt, sodass der gesamte Antrieb schwingungsgedämpft und axial gesichert im Trägerrahmen fixiert ist.

Um zu verhindern, dass axial mittig angeordnete Bereiche des Antriebs bzw. des Gehäuses, beispielsweise der zentrale Getriebebereich, in eingebautem Zustand nicht radial abgezogen werden können, ist bevorzugt vorgesehen, dass alle Abschnitte des Gehäuses mittels ausschließlich axial wirksamer Verschraubungen miteinander verbunden sind. Dadurch wird zwar die grundsätzliche Zerlegbarkeit des Gehäuses beibehalten - nicht aber im eingebauten Zustand des Antriebs im Trägerrahmen. Zur weiteren oder alternativen Unterstützung dieses Aspektes können die einzelnen Gehäuseabschnitte bereichsweise in axialer Richtung überlappen.

Weitere Merkmale und Vorteile der Erfindung ergeben sich aus der nachfolgenden, speziellen Beschreibung und den Zeichnungen.

Es zeigen:
- Figur 1:: eine stark schematisierte Schnittdarstellung eines Antriebs zur Verwendung in einer erfindungsgemäßen Antriebsanordnung sowie
- Figur 2:: eine stark schematisierte Darstellung einer erfindungsgemäßen Antriebsanordnung.

Gleiche Bezugszeichen in den Figuren weisen auf gleiche oder analoge Elemente hin.

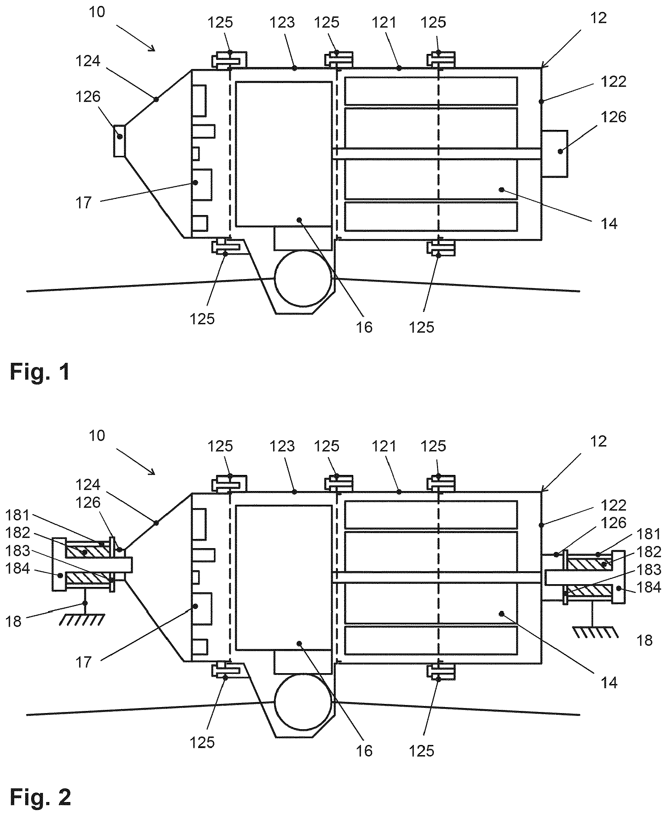

Figur 1 zeigt in stark schematisierter Darstellung den Längsschnitt eines Antriebs 10 zur Verwendung in einer erfindungsgemäßen Antriebsanordnung 1, die in Figur 2 dargestellt ist. Der Antrieb 10 umfasst ein Gehäuse 12, welches aus mehreren axialen Abschnitten zusammengesetzt ist. Insbesondere ist ein Getriebegehäuse 121 vorgesehen, welches eine elektrische Maschine 14 enthält und mittels eines hier als EM-Deckels 122 angesprochenen, selbst einen Gehäuseabschnitt darstellenden Deckels verschließbar ist. Weiter umfasst das Gehäuse 12 ein Getriebegehäuse 123, in welchem ein Getriebe 16 angeordnet ist. Auch das Getriebegehäuse 123 ist mittels eines selbst einen Gehäuseabschnitt darstellenden Deckels verschließbar, der bei einer Ausführungsform eine an dem Getriebegehäuse 123 befestigte Leistungselektronik 17, insbesondere einen Pulswechselrichter abdeckt und daher hier als PWR-Deckel 124 angesprochen wird. Vorteil dieser Ausführungsform ist eine Entkopplung der Leistungselektronik 17 von den auf den PWR-Deckel 124 vom dem Lagerkomponenten wirkenden Kräfte. In einer anderen Ausführungsform könnte der PWR-Deckel 124 auch die Leistungselektronik 17 umfassen. Die Leistungselektronik 17 ist in diesem Fall im PWR-Deckel 124 vormontiert bzw. befestigt und wird danach zusammen mit diesem an das Getriebegehäuse 123 montiert. Vorteil dieser Ausführungsform ist einfacherer und schnellerer Zusammenbau der Antriebsanordnung. Die vorgenannten Gehäusabschnitte 121 - 124 sind mittels rein axial wirkender Schraubverbindungen 125 miteinander verbunden. In Figur 1 ist die Möglichkeit grafisch angedeutet, dass die einzelnen Abschnitte des Gehäuses 12 nicht nur über flache Flansche, in welchen die Schraubverbindungen 125 realisiert sind, aneinander anliegen, sondern einander auch bereichsweise in axialer Richtung überlappen. Hierdurch wird sichergestellt, dass keines der Gehäuseabschnitte in radialer Richtung abgezogen werden kann. Vielmehr wird dadurch vollkommen sichergestellt, dass eine Trennung der einzelnen Gehäuseabschnitte nur in allerlei Richtung möglich ist, wobei zwei benachbarte Elemente um mehr als die Überlappbreite axial auseinandergezogen werden müssten, um zwischen sich einen Spalt zu öffnen, durch welchen ein Werkzeug o.ä. in das Gehäuseinnere eingeführt werden könnte.

Die beiden Deckel 122, 124 sind mit Montagesockeln 126 auf ihren Stirnflächen ausgestattet. Die Montagesockel 126 dienen der Kopplung des Antriebs 10 mit einem Trägerrahmen 18, der in der Montageendlage mit tragenden Strukturen eines Kraftfahrzeugs verbunden ist. Die Einbaulage des Antriebs 10 in den nur angedeuteten Trägerrahmen 18 ist in Figur 2 gezeigt. Insbesondere weist der Trägerrahmen 18 zwei einander gegenüberliegende Buchsen 181 auf, welche lagernd wirkende Gummihülsen 182 aufnehmen. Nach axial innen, d.h. zum Antrieb 10 hin, sind die so gestalteten Gummilager mit Anlagescheiben 183 ausgestattet. Günstigerweise werden die Gummilager vor dem Einbau des Antriebs 10 im Trägerrahmen 18 montiert. Der Abstand zwischen den Anlagescheiben 183 entspricht exakt den axialen Außenabmessungen des Antriebs 10 zwischen seinen Montagesockeln 126. Beim Einbau kann der Antrieb 10 daher, wie in Figur 2 gezeigt, axial passgenau, insbesondere beidseitig an den Anlagescheiben 183 anliegend zwischen den Gummilagern eingesetzt werden. Im Anschluss kann der Antrieb 10 dann mittels die Gummihülsen 182 durchsetzender Lagerbolzen 184 fixiert werden, beispielsweise durch Einschrauben besagter Lagerbolzen 184 in die Montagesockel 126.

Auf diese Weise sind sämtliche Abschnitte 121 bis 124 des Gehäuses 12 miteinander sowie (schwingungsgedämpft) mit dem Trägerrahmen 18 verspannt. Ein Öffnen des Gehäuses 12, insbesondere ein Abziehen eines der Deckel 122, 124 im eingebauten Zustand ist ausgeschlossen. Vielmehr ist es erforderlich, zur Demontage des Gehäuses 12 zunächst den kompletten Antrieb 10 aus dem Trägerrahmen 18 auszubauen, wobei durch geeignete Gestaltung der in den Figuren nicht gezeigten elektrischen Verbindung der Leistungselektronik 18 bzw. der elektrischen Maschine 14 mit einer externen elektrischen Spannungsversorgung sichergestellt werden kann, dass ein solcher Ausbau nur bei getrennter elektrischer Verbindung möglich ist. Beispielsweise kann ein Verbindungskabel entsprechend kurz dimensioniert werden. Alternativ kann eine direkte Steckverbindung zwischen dem Antrieb 10, insbesondere dem Gehäuse 12 und einer anderen festen Struktur des Fahrzeugs, z.B. dem Trägerrahmen 18, realisiert sein, die beim Herausheben des Antriebs 10 aus dem Rahmen 18 automatisch zu einer Trennung der elektrischen Verbindung führt.

Die Erfindung stellt also sicher, dass ein Öffnen des Gehäuses 12, welches Hochspannungsbereiche in seinem Inneren von außen zugänglich macht, nur in Situationen möglich ist, in denen die elektrische Verbindung zu der Spannungsquelle getrennt ist. Dies stellt ein Höchstmaß an HV-Sicherheit dar.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 1: Antriebsanordnung
- 10: Antrieb
- 12: Gehäuse
- 121: Gehäuseabschnitt/Motorgehäuse
- 122: Gehäuseabschnitt/EM-Deckel
- 123: Gehäuseabschnitt/Getriebegehäuse
- 124: Gehäuseabschnitt/PWR-Deckel
- 125: Schraubverbindung
- 126: Montagesockel
- 14: elektrische Maschine
- 16: Getriebe
- 17: Leistungselektronik
- 18: Trägerrahmen
- 181: Buchse von 18
- 182: Gummihülse
- 183: Anlagescheibe
- 184: Lagerbolzen

## Patentansprüche

1. Antriebsanordnung (1) für ein Kraftfahrzeug, umfassend
- einen Antrieb (10) mit einem wenigstens eine elektrische Antriebskomponente einschließenden Gehäuse (12), dessen Gehäusewand in mehrere einander axial benachbarte Abschnitte (121-124) unterteilt ist, wobei die beiden axial endständigen Abschnitte (122, 124) jeweils einen axial abnehmbaren Deckel des Gehäuses (12) bilden,
- einen Trägerrahmen (18) mit rahmenseitigen Lagerkomponenten, die mit korrespondierenden, gehäuseseitigen Lagerkomponenten Lager zur Aufhängung des Gehäuses (10) in dem Trägerrahmen (18) bilden, und
- eine elektrische Verbindung zwischen einem relativ zu dem Gehäuse (12) ortsfesten und mit der elektrischen Antriebskomponente im Gehäuseinneren verbundenen, gehäuseseitigen Anschluss und einem relativ zu dem Trägerrahmen (18) ortsfesten, mit einer elektrischen Energieversorgung verbundenen oder verbindbaren, rahmenseitigen Anschluss,
**dadurch gekennzeichnet, dass**
- die gehäuseseitigen Lagerkomponenten auf den Stirnseiten der beiden axial endständigen Abschnitte (122, 124) des Gehäuses (12) angeordnet sind,
- das Gehäuse (12) beidseitig axial passgenau in den Trägerrahmen (18) eingefügt ist und
- die elektrische Verbindung derart gestaltet ist, dass sie zur Entnahme des Gehäuses (12) aus dem Trägerrahmen (18) gelöst werden muss.

2. Antriebsanordnung (1) nach Anspruch 1,
**dadurch gekennzeichnet,**
**dass** die Stirnseite wenigstens eines der Deckel (122, 124) einen axial vorspringenden Montagesockel (126) aufweist, dessen Spitze die gehäuseseitige Lagerkomponente trägt oder bildet.

3. Antriebsanordnung (1) nach einem der vorangehenden Ansprüche,
**dadurch gekennzeichnet,**
**dass** wenigstens eine der rahmenseitigen Lagerkomponenten als eine rahmenfeste Buchse (181) mit einer in ihr fixierten Gummihülse (182) ausgebildet ist, in der ein an der zugeordneten gehäuseseitigen Lagerkomponente am zugeordneten Deckel (122, 124) des Gehäuses (12) fixierter Lagerbolzen (184) gelagert ist.

4. Antriebsanordnung (1) nach Anspruch 3,
**dadurch gekennzeichnet,**
**dass** der Lagerbolzen (184) mit dem Deckel (122, 124) verschraubt ist.

5. Antriebsanordnung (1) nach einem der vorangehenden Ansprüche,
**dadurch gekennzeichnet,**
**dass** alle Abschnitte (1221 - 124) des Gehäuses (12) mittels ausschließlich axial wirksamer Verschraubungen (125) miteinander verbunden sind.

6. Antriebsanordnung (1) nach einem der vorangehenden Ansprüche,
**dadurch gekennzeichnet,**
**dass** die elektrische Verbindung als ein Kabel ausgebildet ist, dessen geringe Länge keine Entnahme des Gehäuses (12) aus dem Trägerrahmen (18) ohne vorheriges Lösen des Kabels von wenigstens einem der Anschlüsse gestattet.

7. Antriebsanordnung (1) nach einem der Ansprüche 1 bis 5,
**dadurch gekennzeichnet,**
**dass** die elektrische Verbindung als eine unmittelbare Steckverbindung zwischen einer am Gehäuse (12) fixierten Steckerkomponente und einer am Trägerrahmen (18) fixierten Steckerkomponente gestaltet ist.

8. Antriebsanordnung (1) nach einem der vorangehenden Ansprüche,
**dadurch gekennzeichnet,**
**dass** das Gehäuse (12) eine elektrische Maschine (14), ein mechanisch mit der elektrischen Maschine (14) gekoppeltes Getriebe (16) und eine elektrisch mit der elektrischen Maschine (14) verbundene Leistungselektronik (17) einschließt, wobei die elektrische Maschine (14) einerseits und die Leistungselektronik (17) andererseits in den beiden axial endständigen Abschnitten (122, 124) des Gehäuses (12) angeordnet sind.
